# EUROPEAN PATENT SPECIFICATION

(11) **EP 2 025 558 B1**
(45) Date of publication and mention of the grant of the patent: **09.10.2013**
(21) Application number: 07015942.1
(22) Date of filing: 14.08.2007
(51) Int. Cl.: B60R 13/02, B32B 5/18, B32B 5/26, B32B 9/02

(54) **Base material for vehicle headliner**
Basismaterial für eine Fahrzeugverkleidung
Matériau de base pour garniture de toit d'un véhicule

(30) Priority: 18.07.2007 KR 20070071638
(43) Date of publication of application: 18.02.2009
(73) Proprietor: HAN IL E HWA Co., Ltd., Guro-gu, Seoul (KR)
(72) Inventor: Kim, Ki Sung, Asan-si, Chungcheongnam-do (KR); Oh, Young Chan, Asan-si, Chungcheongnam-do (KR)
(74) Representative: Sawodny, Michael-Wolfgang

(56) References cited:
- EP-A- 0 331 447
- EP-A- 0 905 175
- WO-A-2004/056565
- US-B1- 6 287 678

## Description

### CROSS-REFERENCE TO RELATED APPLICATION

This application is based on and claims priority from Korean Patent Application No. 10-2007-71638, filed on July 18, 2007 in the Korean Intellectual Property Office.

### BACKGROUND OF THE INVENTION

### Field of the invention

The present invention relates to a base material for a vehicle headliner, and more particularly, to a base material for a vehicle headliner that has high recyclability and excellent physical properties such as lightweight and high strength.

### Description of the Prior Art

Conventionally, a base material for a vehicle headliner comprises a resin felt, a board reinforced with natural fiber, a paper board, a wood fiber, rigid polyurethane foam, and so forth.

The resin felt and the paper board are made by impregnation of a phenolic resin. The phenolic resin which is used as a curing agent is a kind of thermosetting resins prepared by condensation reaction of phenols and aldehydes. The phenolic resin has a drawback that phenol and aldehyde resulted from non-reaction or incomplete combustion in the incineration of the phenolic resin are regarded as toxic gas which is pollution material in the life environment comprising a working field.

In case of a conventional vehicle headlining comprising glass fiber or glass chop, glass dust generated in manufacturing and transferring processes has a harmful influence on workers, and an adhesive containing volatile organic solvent for bonding the material is also harmful to health.

Although the rigid polyurethane foam has good heat resistance and lightweight, its recyclability is bad, and it is liable to brittleness in a forming process of manufacturing the headlining, because of weak impact resistance.

The base material for the conventional vehicle headliner has the following drawbacks: its soundproofing effect is not excellent; it is relatively expensive and heavy; it is liable to deformation in prolonged use; it is harmful to health; and recycling of the material is difficult.

US-B1-6 287 678 is directed to a composite structural panel including a core of thermoplastic material and outer layers containing natural fibers in a thermoplastic material. The foam core is preferably a substantially rigid sheet or board of expanded polypropylene beads that have been heated and pressed together.

WO 2004/056565 A1 relates to a method of producing a flexible automobile interior material or construction sheet. It is described a foamed layer as core sheet produced by foaming polypropylene chips, polyethylene chips, polyurethane chips or expanded polystyrene chips.

Therefore, the last two documents do not allow to practice continuous lamination.

EP-A-0 905 175 is directed to a foam, an interior material and a molded article destined for an interior vehicular material, which is substantially free from the problem of fogging. It is therefore provided a foam, comprising a fogging inhibitor to keep the amount of the precipitate detected by the fogging test at 0.8 mg or less.

Furthermore, EP-A-0 331 447 describes a molded laminated article comprising a crosslinked polyolefin resin foam having a skin material bonded to one surface and a thermoplastic resin as a skeleton material integrally molded on the other surface.

### SUMMARY OF THE INVENTION

Accordingly, the present invention has been made to solve the above-mentioned problems occurring in the prior art while advantages achieved by the prior art are maintained intact.

One object of the present invention is to provide a base material for a vehicle headliner capable of increasing the fuel efficiency due to the lightweight.

Another object of the present invention is to provide a base material for a vehicle headliner which can be easily recycled when a vehicle is disused.

Still another object of the present invention is to provide a base material for a vehicle headliner having high strength and harmlessness for a human body.

In order to accomplish these objects, there is provided a base material for a vehicle headliner, which includes a core sheet ; and reinforcing layers disposed on upper and lower layers of the core sheet and made of natural fiber and synthetic fiber whereby the core sheet is made of a crosslinked polyolefin foam sheet.

In an embodiment, the foaming of the crosslinked polyolefin foam sheet is performed with 5 to 30 magnifications, and has a thickness of 3 to 8 mm.

In order to improve the strength, the reinforcing layer is laminated on the upper and lower portions of the polyolefin foam sheet. Preferably, the reinforcing layer is made of natural fiber and synthetic fiber.

The polyolefin foam sheet applied as the core sheet is a crosslinked polyolefin foam sheet. The crosslinked polyolefin foam can by classified into chemical crosslink and physical crosslink. The polyolefin foam applied in the present invention is not limited to a type of crosslinked, but it is preferable that a manufacturing method using the physical crosslinked is applied in the present invention.

Preferably, the resin for manufacturing the crosslinked polyolefin foam is a mixture of polypropylene and linear low density polyethylene. In case of using only polypropylene, when radiation is irradiated onto the resin as the physical crosslinked method, chains of the polypropylene are easily broken, and the crosslinking efficiency is not high. Consequently, a given amount of linear low density polyethylene is added. Since elongation of a product is abruptly increased when using the linear low density polyethylene, the formability is improved.

In addition to the low density polyethylene, high density polyethylene, ethylene propylene diene monomer (EPDM) rubber, and ethylene propylene monomer (EPM) rubber, elatomer, may be used.

A co-agent agent should be added so as to crosslinked the polyolefin resin. The co-agent agent is preferably multifunctional vinyl monomers, such as divinylbenzene, triallylcyanurate, trimethyol propane triacylate, nitrosobenzene, diphenylguanidine and ethylene glycol dimethylacrylate, and trimethylol propane trimethaacrylate. Preferably, contents of the co-agent are 0.5 to 3.0 parts by weight, more preferably, 0.8 to 1.5 parts by weight. Also, at least two co-agents may be added under the range of the parts by weight.

Preferably, a gel-content of the crosslinked polyolefin foam by the irradiation is 30% to 60%. The gel-content may be measured by ASTM D-2765.

A foaming agent used to manufacture the crosslinked polyolefin foam sheet is generally a thermal decomposable foaming agent, for example, azodicarbonamide(ADCA). The content of ADCA is varied depending upon the foaming expansion, but it is preferable that it is in the range of 5 to 25 phr.

Also, an inorganic filler, antioxidant, uv-absorber, an antistatic agent, colorant may be added, in addition to the additives, if necessary.

According to the method of manufacturing the crosslinked foam sheet, after the resin and additives are mixed in a mixer, the mixture is extruded in a sheet shape of a given thickness through an extrusion apparatus. The sheet is irradiated with the radiation. Then, the extruded sheet is passed through a foaming oven to manufacture the foam sheet. The crosslinked foam sheet has a thickness of 3 to 8 mm and a width of 700 to 1600 mm.

### BRIEF DESCRIPTION OF THE DRAWINGS

The above and other objects, features and advantages of the present invention will be more apparent from the following detailed description taken in conjunction with the accompanying drawings, in which:
FIG. 1 is a view illustrating a conventional vehicle headliner;
FIG. 2 is a view illustrating a base material for a vehicle headliner according to an embodiment of the present invention; and
FIG. 3 is an enlarged view illustrating a vehicle headliner to which the base material structure according to the present invention is applied.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

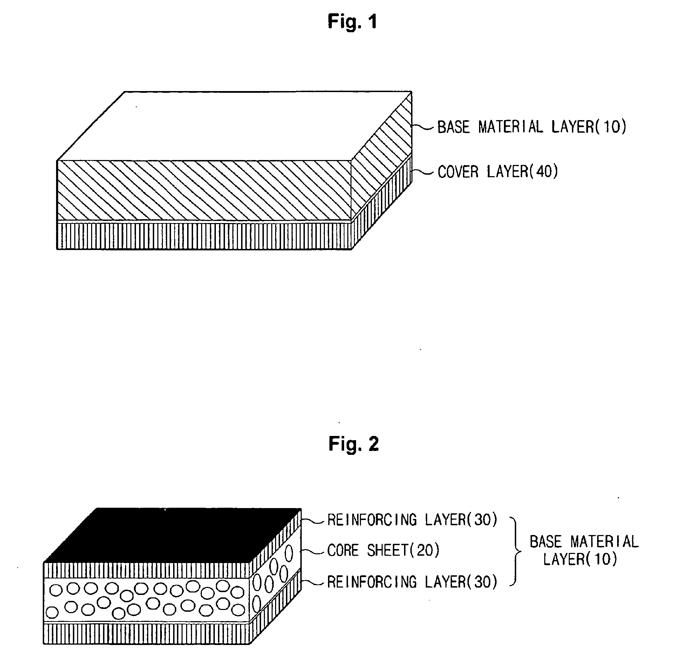

FIG. 1 is a view illustrating a conventional vehicle headliner. The headliner includes a base material layer 10 and a cover layer 11. FIG. 2 is a view illustrating a base material for a vehicle headliner according to an embodiment of the present invention. The headliner of the present invention includes a core layer made of a polyolefin foam sheet and a reinforcing layer 30 made of natural fiber and polypropylene.

Preferably, the foaming of the polyolefin foam sheet 20 which is used in the base material layer 10 according to an embodiment of the present invention is performed with 5 to 30 times. More specifically, if the foaming is performed with less than 5 times, the sound absorbing ability of the foam sheet 20 is deteriorated, and it becomes heavy. If the foaming is performed with more than 30 magnifications, the sound absorbing ability is improved and it becomes light. However, shape stability thereof is deteriorated. Since the polyolefin foam sheet 20 is used in the vehicle headliner, it should have given dimensions. That is, preferably, the thickness is 3 to 8 mm, more preferably, 3 to 6 mm. Two polyolefin foam sheets may be laminated to have a thickness of 6 to 8 mm.

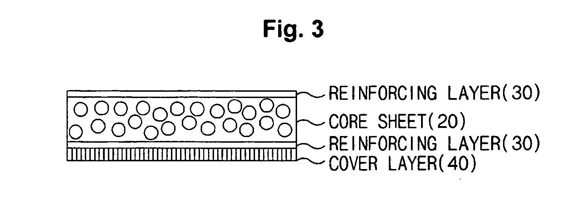

The base material 10 for a vehicle headliner according to an embodiment of the present invention includes a reinforcing layer 30 layered on one or both sides of the polyolefin foam sheet 20, as shown in FIG. 3. The reinforcing layer 30 is made of natural fiber and synthetic fiber. For example, the reinforcing layer may be a sheet layer made of natural fiber and polypropylene resin. Preferably, a mixing ratio of the polyolefin foam and the natural fiber is 30:70 to 70:30 in weight percentage, and the thickness is in the range of 1 to 3 mm. Preferably, the natural fiber of 40 to 120 µm in diameter and 40 to 80 mm in length is supplied. The natural fiber is scutched in a mixing process so that the diameter becomes 20 to 60 µm and the length becomes 3 to 15 mm. Preferably, the polyolefin fiber is 6 to 15 deniers in diameter and 40 to 80 mm in length.

The base material 10 for a vehicle headliner according to the present invention is made by introducing a foam layer between upper and lower fiber layers, for example, by bonding the foam layer and the fiber layers through a needle punching process. When the lower fiber layer, the foam layer, and the upper fiber layer are layered, a high-strength cover layer may be layered on the upper fiber layer, if necessary. After the natural fiber and the polyolefin fiber are mixed to form the foam layer and the foam layer is inserted between the upper and lower fiber layers, the upper fiber layer and the foam layer, and the foam layer and the lower fiber layer are respectively made by the needle punching.

Therefore, the base material for a vehicle headliner according to the present invention has a multilayered structure in which the fiber of the reinforcing material and the core layer are physically bonded to each other by processing the upper fiber layer, the foam layer, and the lower fiber layer through adhesive and heat lamination or needle punching.

The base material for a vehicle headliner is layered on one or both sides of the polyolefin foam sheet 20 to improve the strength and the shape stability of the base material layer 10. In addition, when the sheet layer consisting of the natural fiber and the polypropylene resin is formed by a mold, the releasability of the mold is increased to improve the workability.

Referring to FIG. 3, a cover layer 40 is laminated on the portion of the reinforcing layer 30 laminated on one or both sides of the polyolefin foam sheet 20 which is adhered to a vehicle roof. The cover layer 40 is made of polyolefin nonwoven or polyester-based nonwoven.

As described, according to the present invention, the vehicle headliner made by laminating the reinforcing layer 30 and the cover layer 40 together with the polyolefin foam sheet 20 as a core sheet is processed by a mold as shown in FIG. 3. The base material 10 for a vehicle headliner has excellent dimensional stability and strength.

When the cover layer 40 made of the polyolefin nonwoven is laminated on the sheet layer consisting of the natural fiber and the PP resin, melt bonding using heat is possible, without using a solvent-based adhesive or hot melt-type adhesive, so that the laminating process becomes very simple. In addition, the bed smell generated when using an adhesive can be solved. Since the polyolefin foam sheet 20 is used as the core sheet and the nonwoven is used as the cover layer 40, the cover layer 40 and the core sheet are not separated when scrapping a car, which can save resources and be environmental friendly.

With the above description, according to the base material for a vehicle headliner, soundproof and heat resistance characteristics are excellent, and the strength is very high. Also, it is not harmful to a human body.

In case that the vehicle lining structure consists of the polyolefin material, it is easily recycled when the vehicle is disused.

## Claims

1. A base material for a vehicle headliner comprising:
a core sheet; and
reinforcing layers disposed on upper and lower portions of the core sheet and made of natural fiber and synthetic fiber
**characterized in that** the core sheet is made of a crosslinked polyolefin foam sheet.

2. The base material for a vehicle headliner as claimed in claim 1, wherein the crosslinked polyolefin foam sheet comprises at least one selected from the group consisting of polypropylene, linear low density polyethylene, low density polyethylene, high density polyethylene, ethylene propylene diene monomer (EPDM) rubber, elastomer and ethylene propylene monomer (EPM) rubber.

3. The base material for a vehicle headliner as claimed in claim 1, wherein the crosslinked polyolefin foam sheet has a width of 700 to 1600 mm.

4. The base material for a vehicle headliner as claimed in claim 1, wherein foaming of the crosslinked polyolefin foam sheet is performed with 5 to 30 magnifications, and has a thickness of 3 to 8 mm.

5. The base material for a vehicle headliner as claimed in claim 1, wherein the polyolefin foam sheet has a thickness of 3 to 8 mm, and two polyolefin foam sheets are laminated to have a thickness of 6 to 8 mm.

6. The base material for a vehicle headliner as claimed in claim 1, wherein the synthetic fiber is a polyolefin fiber and a mixing ratio of the polyolefin fiber and the natural fiber is 30:70 to 70:30 in weight percentage, and the reinforcing layer has a thickness of 1 to 3 mm.

7. The base material for a vehicle headliner as claimed in claim 1, wherein the natural fiber has a diameter of 40 to 120 µm and a length of 40 to 80 mm, the synthetic fiber is a polyolefin fiber and the polyolefin fiber has a diameter of 6 to 15 deniers and a length of 40 to 80 mm,

8. The base material for a vehicle headliner as claimed in claim 1, wherein the natural fiber comprises at least one selected from the group consisting of jute, kenaf and sisal.

9. The base material for a vehicle headliner as claimed in claim 1, wherein the synthetic fiber comprises at least one selected from the group consisting of low-melting point polyester, polyester, and polyethylene.

## Patentansprüche

1. Grundmaterial für eine Fahrzeugdachinnenverkleidung, umfassend:
eine Kernlage; und
Verstärkungsschichten, die an oberen und unteren Abschnitten der Kernlage angeordnet sind und aus natürlicher Faser und synthetischer Faser hergestellt sind;
**dadurch gekennzeichnet, dass** die Kernlage aus einer Lage aus vernetztem Polyolefin-Schaumstoff hergestellt ist.

2. Grundmaterial für eine Fahrzeugdachinnenverkleidung nach Anspruch 1, wobei die Lage aus vernetztem Polyolefin-Schaumstoff mindestens eines umfasst, das aus der Gruppe gewählt ist, die aus Folgendem gebildet ist: Polypropylen, lineares Polyethylen niederer Dichte, Polyethylen niederer Dichte, Polyethylen hoher Dichte, Ethylen-Propylen-Dien-Monomer-Kautschuk (EPDM), Elastomer und Ethylen-Propylen-Monomer-Kautschuk (EPM).

3. Grundmaterial für eine Fahrzeugdachinnenverkleidung nach Anspruch 1, wobei die Lage aus vernetztem Polyolefin-Schaumstoff eine Breite von 700 bis 1600 mm aufweist.

4. Grundmaterial für eine Fahrzeugdachinnenverkleidung nach Anspruch 1, wobei die Lage aus vernetztem Polyolefin-Schaumstoff mit einer 5- bis 30-fachen Vergrößerung aufgeschäumt wird und eine Dicke von 3 bis 8 mm aufweist.

5. Grundmaterial für eine Fahrzeugdachinnenverkleidung nach Anspruch 1, wobei die Lage aus Polyolefin-Schaumstoff eine Dicke von 3 bis 8 mm aufweist und wobei zwei Polyolefin-Schaumstofflagen übereinandergelegt werden, um eine Dicke von 6 bis 8 mm zu erreichen.

6. Grundmaterial für eine Fahrzeugdachinnenverkleidung nach Anspruch 1, wobei die synthetische Faser eine Polyolefinfaser ist und ein Mischungsverhältnis zwischen der Polyolefinfaser und der natürlichen Faser 30:70 bis 70:30 Gew.-% beträgt und wobei die Verstärkungsschicht eine Dicke von 1 bis 3 mm aufweist.

7. Grundmaterial für eine Fahrzeugdachinnenverkleidung nach Anspruch 1, wobei die natürliche Faser einen Durchmesser von 40 bis 120 µm und eine Länge von 40 bis 80 mm aufweist und wobei die synthetische Faser eine Polyolefinfaser ist und die Polyolefinfaser einen Durchmesser von 6 bis 15 Denier und eine Länge von 40 bis 80 mm aufweist.

8. Grundmaterial für eine Fahrzeugdachinnenverkleidung nach Anspruch 1, wobei die natürliche Faser mindestens eines umfasst, das aus der Gruppe gewählt ist, die aus Jute, Kenaf und Sisal gebildet ist.

9. Grundmaterial für eine Fahrzeugdachinnenverkleidung nach Anspruch 1, wobei die synthetische Faser mindestens eines umfasst, das aus der Gruppe gewählt ist, die aus Polyester mit niedrigem Schmelzpunkt, Polyester und Polyethylen gebildet ist.

## Revendications

1. Un matériau de base pour une garniture de toit d'un véhicule comprenant :
Une strate d'épaisseur ; et
Des couches de renfort disposées sur des portions supérieures et inférieures de la strate d'épaisseur et faites en fibre naturelle et en fibre synthétique **Caractérisé en ce que** la strate d'épaisseur est fabriquée avec une mousse à découper en polyoléfine réticulée.

2. Le matériau de base pour une garniture de toit d'un véhicule tel que revendiqué dans la revendication 1, où la mousse à découper en polyoléfine réticulée en comprend au moins un sélectionné à partir du groupe se composant de polypropylène, polyéthylène faible densité linéaire, polyéthylène faible densité, polyéthylène haute densité, caoutchouc monomère diénique de propylène éthylène (EPDM), caoutchouc monomère de propylène éthylène et élastomère (EPM).

3. Le matériau de base pour une garniture de toit d'un véhicule tel que revendiqué dans la revendication 1, où la mousse à découper en polyoléfine réticulée possède une largeur de 700 à 1600 mm.

4. Le matériau de base pour une garniture de toit d'un véhicule tel que revendiqué dans la revendication 1, où le moussage de la mousse à découper en polyoléfine réticulée est effectué avec 5 à 30 grossissements et possède une épaisseur de 3 à 8 mm.

5. Le matériau de base pour une garniture de toit d'un véhicule tel que revendiqué dans la revendication 1, où la mousse à découper en polyoléfine possède une épaisseur de 3 à 8 mm, et deux mousses à découper en polyoléfine sont laminées pour avoir une épaisseur de 6 à 8 mm.

6. Le matériau de base pour une garniture de toit d'un véhicule tel que revendiqué dans la revendication 1, où la fibre synthétique est une fibre polyoléfine et une proportion de mélange de la fibre polyoléfine et la fibre naturelle est 30 :70 à 70 :30 en pourcentage de poids, et la couche de renfort possède une épaisseur de 1 à 3 mm.

7. Le matériau de base pour une garniture de toit d'un véhicule tel que revendiqué dans la revendication 1, où la fibre naturelle possède un diamètre de 40 à 120 µm et une longueur de 40 à 80 mm, la fibre synthétique est une fibre polyoléfine et la fibre polyoléfine possède un diamètre de 6 à 15 deniers et une longueur de 40 à 80 mm.

8. Le matériau de base pour une garniture de toit d'un véhicule tel que revendiqué dans la revendication 1, où la fibre naturelle en comprend au moins un sélectionné à partir du groupe se composant de jute, kenaf et sisal.

9. Le matériau de base pour une garniture de toit d'un véhicule tel que revendiqué dans la revendication 1, où la fibre synthétique en comprend au moins sélectionné à partir du groupe se composant d'un polyester à point de fusion bas, de polyester et de polyéthylène.
